# EUROPÄISCHE PATENTANMELDUNG

(11) **EP 1 752 795 A2**
(43) Veröffentlichungstag der Anmeldung: **14.02.2007**
(21) Anmeldenummer: 06014092.8
(22) Anmeldetag: 07.07.2006
(51) Int. Cl.: G01V 8/12

(54) **Optischer Sensor**

(30) Priorität: 09.08.2005 DE 102005037490
(71) Anmelder: Leuze electronic GmbH + Co. KG, 73277 Owen/Teck (DE)
(72) Erfinder: Quapil, Gerald, 73277 Owen/Teck (DE); Argast, Martin, 72584 Hülben (DE)
(74) Vertreter: Ruckh, Rainer Gerhard

(57) **Zusammenfassung**

Optischer Sensor 1 mit wenigstens einem Sendelichtstrahlen 3, 3a bis 3n emittierenden Sender 2, 2a bis 2n, wenigstens einem Empfangslichtstrahlen 5, 5a bis 5n empfangenden Empfänger 6, 6a bis 6n sowie einer Auswerteeinheit 9 zur Generierung eines Objektfeststellungssignals in Abhängigkeit der am Ausgang des Empfängers 6, 6a bis 6n anstehenden Empfangssignale, dadurch gekennzeichnet, dass als Sensorkomponenten der Sender 2, 2a bis 2n und/oder der Empfänger 6, 6a bis 6n und/oder wenigstens Komponenten der Auswerteeinheit 9 als organische Halbleiter enthaltende Sensorkomponenten ausgebildet sind.

## Beschreibung

Die Erfindung betrifft einen optischen Sensor gemäß dem Oberbegriff des Anspruchs 1.

Derartige optische Sensoren können insbesondere als Einweglichtschranken, Reflexionslichtschranken, Lichttaster oder Distanzsensoren ausgebildet sein. Generell sind die Sensorkomponenten derartiger optischer Sensoren in einem oder in zwei Gehäusen integriert. Die Elektronikkomponenten des optischen Sensors sind auf Leiterplatten angeordnet. Die optischen Komponenten wie der Sender und der Empfänger sind ebenfalls auf Leiterplatten angeordnet und im Bereich von Austrittsfenstern in den Wänden der Gehäuse angeordnet, so dass die von dem Sender emittierten Sendelichtstrahlen bzw. die auf einen Empfänger geführten Empfangslichtstrahlen dieses Austrittsfenster durchsetzen können. Weiterhin müssen in den Gehäusen der optischen Sensoren Optiken wie Linsen integriert werden, um eine Strahlformung bzw. Fokussierung der Sendelichtstrahlen bzw. Empfangslichtstrahlen zu erreichen.

Nachteilig hierbei ist, dass bedingt durch die Vielzahl der Einzelteile des optischen Sensors dessen Herstellkosten und Fertigungszeiten unerwünscht hoch sind. Insbesondere erfordert die Bestückung der Leiterplatten des optischen Sensors mit den jeweiligen optischen und elektronischen Sensorkomponenten einen erheblichen Aufwand.

Weiterhin ist nachteilig, dass derartige optische Sensoren eine unerwünscht hohe Bautiefe aufweisen, die eine Montage beispielsweise in engen Nischen von Maschinen und Anlagen erschweren. Ein wesentlicher besonderer Faktor für diese große Bautiefe der optischen Sensoren sind die Abmessungen und Brennweiten der für die Strahlformung der Sendelichtstrahlen und Empfangslichtstrahlen verwendeten Optiken, an welche das jeweilige Gehäuse angepasst sein muss.

Der Erfindung liegt die Aufgabe zugrunde, einen kostengünstig herstellbaren optischen Sensor mit geringer Bauhöhe bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor besteht aus wenigstens einem Sendelichtstrahl emittierenden Sender, wenigstens einem Empfangslichtstrahlen empfangenden Empfänger sowie einer Auswerteeinheit, welche zur Generierung eines Objektfeststellungssignals in Abhängigkeit der am Ausgang des Empfänger anstehenden Empfangssignale dient. Der Sender und/oder der Empfänger und/oder wenigstens Komponenten der Auswerteeinheit sind als organische Halbleiter enthaltende Sensorkomponenten ausgebildet.

Durch den Einsatz von organischen Halbleitern zur Ausbildung der Sensorkomponenten kann eine signifikante Reduzierung der Herstellkosten und Verringerung der Bautiefen der erfindungsgemäßen optischen Sensoren erzielt werden.

Die verwendeten optischen Halbleiter bestehen generell aus niedermolekularen Systemen oder Polymeren mit konjugierten π-Elektronen-Systemen, über welche ein Ladungstransport erfolgen kann. Typische Vertreter derartiger Materialen sind Polyacene, wie zum Beispiel Pentazen, Tetrazen, Anthrazen. Weitere derartige optische Halbleiter sind Polyfluoren, Fulleren C₆₀ oder Kupfer-Phtalocyanin (CᵤP_{c}).

Mit derartigen organischen Halbleitern sind einerseits elektronische Schaltelemente wie zum Beispiel organische Feldeffekttransistoren herstellbar. Andererseits können mit organischen Halbleitern auch optisch aktive Bauelemente wie organische LED hergestellt werden.

Generell können diese optische Halbleiter in Form von dünnen Filmen hergestellt werden. Aufgrund der einfachen Verarbeitbarkeit derartiger Filme kann der Herstellungsprozess zur Fertigung der Sensorkomponenten erheblich vereinfacht werden. Weiterhin ist vorteilhaft, dass mit derartigen organischen Halbleitern in Form von Filmen Sensorkomponenten mit besonders geringem Bautiefen realisiert werden können.

In einer besonders vorteilhaften Ausführungsform der Erfindung werden Sensorkomponenten bildende organische Halbleiter in Form von Filmen auf Polymerfolien aufgedruckt, wodurch im einfachsten Fall bereits gebrauchsfertige optische Sensoren entstehen.

Durch den Bedruckungsvorgang gelingt eine besonders rationelle Fertigung des optischen Sensors. Die Fertigungsschritte zur Herstellung des optischen Sensors können somit gegenüber bekannten Systemen signifikant reduziert werden.

In einer besonders vorteilhaften Ausführungsform der Erfindung können sämtliche optoelektronischen und elektronischen Komponenten aus organischen Halbleitern bestehen und in Form von Filmen auf die Polymerfolie zur Herstellung des optischen Sensors aufgedruckt werden, wodurch eine besonders rationelle Herstellung des optischen Sensors erzielt wird.

Auch die Optikelemente zur Strahlformung der Sendelichtstrahlen und Empfangslichtstrahlen können bei dem erfindungsgemäßen optischen Sensor einfach und schnell montiert werden. Insbesondere bei optischen Sensoren mit Mehrfachanordnungen von Sendern und Empfängern können die Optikelemente Bestandteile von Optikplatten sein, die durch Aufkleben auf den Polymerfolien schnell und einfach montiert werden können.

Ein weiterer wesentlicher Vorteil der Erfindung besteht darin, dass für den optischen Sensor kein Gehäuse benötigt wird, da die Polymerfolien als Trägermaterialien für die Sensorkomponenten ausreichend sind. Dadurch wird neben einer Reduzierung der Herstellkosten auch eine äußerst geringe Bautiefe des optischen Sensors erzielt.

Hierbei ist insbesondere auch vorteilhaft, wenn die Polymerfolien zur Ausbildung des optischen Sensors flexibel sind. Damit können die Polymerfolien zur Ausbildung vorgegebener Sensoranordnungen gefaltet werden. Der so ausgebildete optische Sensor kann damit flexibel an verschiedene Applikationen und geometrische Randbedingungen angepasst werden.

Ein weiterer wesentlicher Vorteil der Erfindung besteht darin, dass auf den Polymerfolien mit geringem Herstellungs- und Kostenaufwand Mehrfachanordnungen von Sendern und Empfängern angeordnet werden können, wobei auch sehr große Anzahlen von Sendern und Empfängern auf den Polymerfolien integriert werden können.

Bei derartigen optischen Sensoren können die Anforderungen an die Zuverlässigkeit und Messgenauigkeit der einzelnen Sender und Empfänger gering gehalten werden, da die Anforderungen an die Messgenauigkeit bei der Objektdetektion mittels des Sensors auf die einzelnen Sensorkomponenten verteilt werden kann. Dies führt einerseits zu einer erhöhten Ausfallsicherheit des optischen Sensors, da dieser auch bei Ausfall einzelner Sender und Empfänger noch funktionsfähig bleibt. Weiterhin können durch statistische Auswerteverfahren für die Messergebnisse der einzelnen Sensorelemente, bestehend aus einzelnen Sendern und Empfängern, auch komplexe Messaufgaben bewältigt werden. Schließlich können mit derartigen Mehrfachanordnungen von Sendern und Empfängern durch selektive, zeitaufgelöste Aktivierung dieser Komponenten Scanfunktionen und allgemein genaue Verfolgungen von bewegten Objekten durchgeführt werden.

Schließlich können unter Verwendung der organischen Halbleiter zur Herstellung der optischen Sensoren verschiedenartige Sensortypen wie Einweglichtschranken, Reflexionslichtschranken, Lichttaster oder scannende Systeme realisiert werden.

Die Erfindung wird im Nachstehenden anhand der Zeichnungen erläutert. Es zeigen:
- Figur 1:: Blockschaltbild eines optischen Sensors.
- Figur 2:: Grundaufbau des optischen Sensors gemäß Figur 1 mit einer Polymerfolie zur Aufnahme von optischen und elektronischen Komponenten.
- Figur 3:: Anordnung von Sendern für den optischen Sensor gemäß Figur 1 in einer Draufsicht und in einem Längsschnitt.
- Figur 4:: Ausführungsform einer Polymerfolie für einen optischen Sensor mit flexiblen Bereichen.
- Figur 5:: Ausführungsform einer Polymerfolie für einen optischen Sensor mit mehrfach um 180° gefalteten Bereichen.
- Figur 6:: Perspektivische Ansicht der Anordnung gemäß Figur 5.
- Figur 7:: Anordnung mit einer zweilagigen Anordnung von Polymerfolien mit dazwischen liegender Optikplatte für einen optischen Sensor.
- Figur 8:: a) Induktive Kopplung zweiter optischer Sensoren.
b) Draufsicht auf einen der optischen Sensoren der Anordnung gemäß a).
- Figur 9:: Verbindung von Polymerfolien zweier optischer Sensoren durch Leitkleber.
- Figur 10:: Ausführungsform eines optischen Sensors als Lichtschrankenanordnung.
- Figur 11:: Optischer Sensor mit einem Senderarray und einer zugeordneten Kamera.
- Figur 12:: Weitere Ausführungsform eines optischen Sensors als Lichtschrankenanordnung.
- Figur 13:: Ausführungsform eines optischen Sensors als energetischer Taster.
- Figur 14:: Optischer Sensor in Form einer Lichtschrankenanordnung an einer Rollenbahn.
- Figur 15:: Zeitdiagramme der Empfangssignale und des Objektfeststellungssignals für die Anordnung nach Figur 14.
- Figur 16:: Zeitdiagramme der Sendepulse und Empfangspulse für die Anordnung nach Figur 14.
- Figur 17:: Variante der Lichtschrankenanordnung gemäß Figur 14 mit einer Textanzeige durch die Sender.
- Figur 18:: Diagramm der Mess- und Anzeigefolge für die Anordnung gemäß Figur 17.
- Figur 19:: Positionsbestimmung eines Objekts an der Rollenbahn mittels des optischen Sensors gemäß Figur 14.
- Figur 20:: Variante des optischen Sensors gemäß Figur 19.
- Figur 21:: Erkennung eines horizontalen Polymerlabels an einer Rollenbahn mittels eines optischen Sensors.
- Figur 22:: Erkennung eines vertikalen Polymerlabels an einer Rollenbahn mittels eines optischen Sensors.
- Figur 23:: Autarke Lichtschrankenanordnung an einer Rollenbahn.
- Figur 24:: Zeitdiagramm der Versorgungsspannung für die Anordnung nach Figur 23.
- Figur 25:: Sender-Empfänger-Anordnung eines optischen Sensors mit gerichtetem Strahlengang.
- Figur 26:: Strahlengang für einen als Glanztaster bei ausgebildeten optischen Sensoren bei Objektabstand "fern".
- Figur 27:: Strahlengang für einen als Glanztaster ausgebildeten optischen Sensor bei Objektabstand "nah".
- Figur 28:: Glanztaster mit divergenten Sendestrahlen.
- Figur 29:: Variante des optischen Sensors gemäß Figur 28.
- Figur 30:: Sender-Empfänger-Anordnung einer weiteren Ausführungsform eines optischen Sensors

- Figur 31 a:: Schematische Darstellung eines als Taster ausgebildeten optischen Sensors.
- Figur 31b:: Erster Betriebsmodus des optischen Sensors gemäß Figur 31a.
- Figur 32a, b:: Zweiter Betriebsmodus des optischen Sensors gemäß Figur 31 a.
- Figur 33:: Dritter Betriebsmodus des optischen Sensors gemäß Figur 31 a.
- Figur 34:: Optischer Sensor mit zeilen- und spaltenweiser Ansteuerung von Sendern und Empfängern.
- Figur 35:: Optischer Sensor mit einer kreisförmigen Sende- und Empfangsordnung.
- Figur 36:: Seitenansicht des optischen Sensors gemäß Figur 35.
- Figur 37:: Anordnung ein als V-Taster ausgebildeten optischen Sensors.

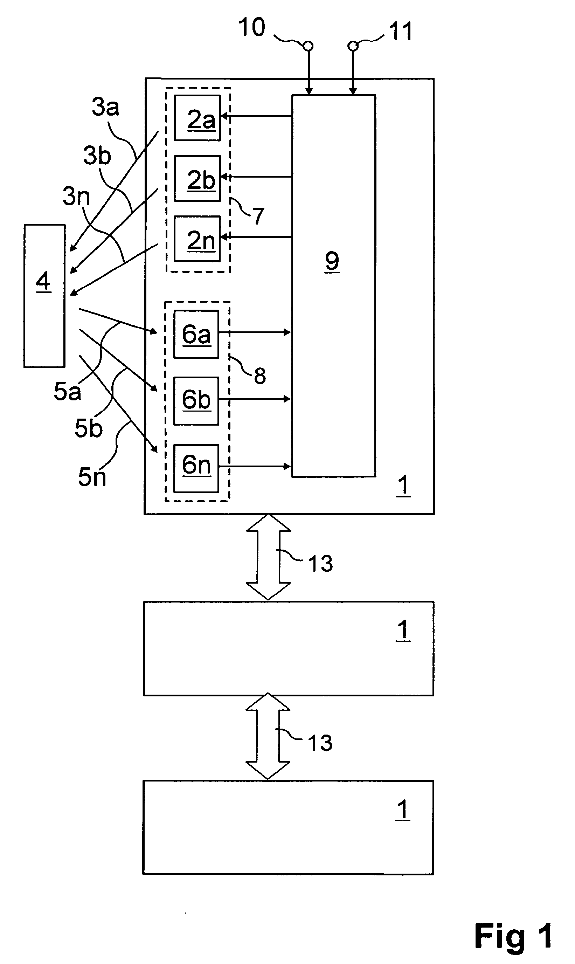

Figur 1 zeigt das Blockschaltbild eines optischen Sensors 1. Der optische Sensor 1 weist mehrere Sender 2a bis 2n auf, welche Sendelichtstrahlen 3a bis 3n emittieren. Die Sendelichtstrahlen 3a bis 3n werden von einem zu erfassenden Objekt 4 als Empfangslichtstrahlen 5a bis 5n zu mehreren Empfängern 6a bis 6n als weitere Komponenten des optischen Sensors 1 reflektiert. Die Sender 2, 2a bis 2n bilden eine Sendereinheit 7, die Empfänger 6, 6a bis 6n einer Empfängereinheit 8, welche an eine gemeinsame Auswerteeinheit 9 angeschlossen sind.

Die Auswerteeinheit 9 bereitet aus den Empfangssignalen der Empfänger 6a bis 6n Objcktdatcn auf und generiert eine Objektmeldung, insbesondere ein binäres Schaltsignal, das an einem Schaltausgang 10 ausgegeben wird.

Die Schaltzustände des Schaltsignals geben an, ob sich ein Objekt 4 innerhalb eines vom optischen Sensor 1 erfassten Überwachungsbereichs befindet oder nicht.

Über eine serielle Schnittstelle 11 können Parameter in den optischen Sensor 1 eingegeben werden. Mehrere optische Sensoren 1 können über einen Sensorbus 13 zusammengeschaltet werden.

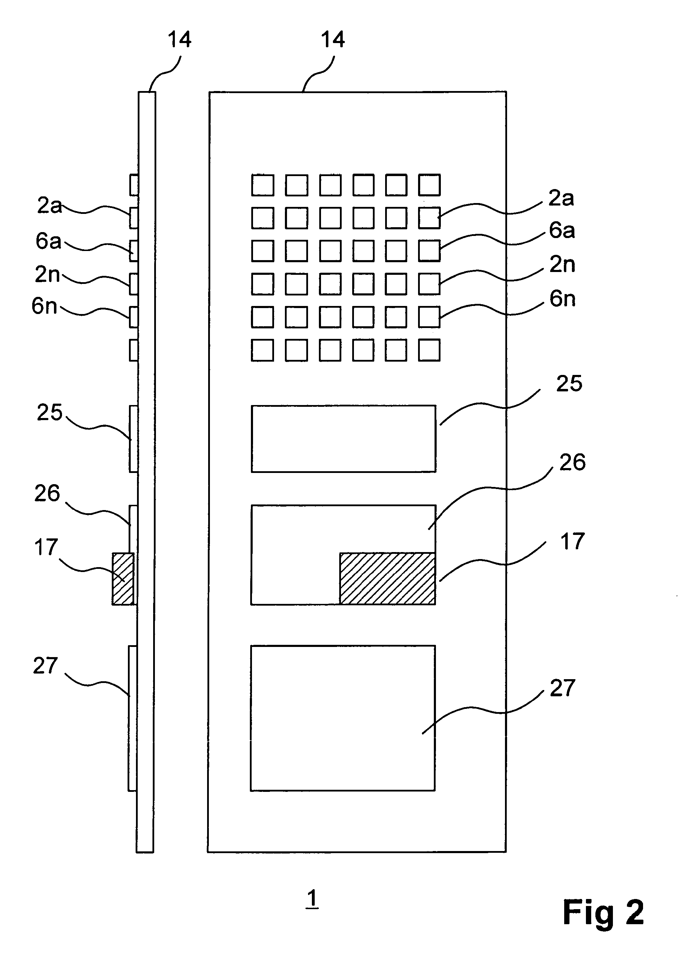

Figur 2 zeigt den Grundaufbau des optischen Sensors 1 gemäß Figur 1. Eine Polymerfolie 14 trägt alle Bestückungselemente des optischen Sensors 1, insbesondere die Sender 2a bis 2n und die Empfänger 6a bis 6n, sowie elektrische Komponenten des optischen Sensors 1 in Form von aus Filmen bestehenden organischen Halbleitern, die auf die Polymerfolie 14 aufgedruckt sind sowie diskrete Bauelemente 17. Die aufgedruckten Schaltungsteile sind hier von einer Ansteuerschaltung 25 zur Ansteuerung der Sender 2, 2a bis 2n, einer Auswerteschaltung 26 und einem Versorgungs- und Verbindungsteil 27 gebildet, wobei die Auswerteschaltung 26 zur Ausbildung der Auswerteeinheit 9 dient. Die Polymerfolie 14 kann flexibel oder auch starr, d. h. in Form einer Polymerplatte ausgebildet sein.

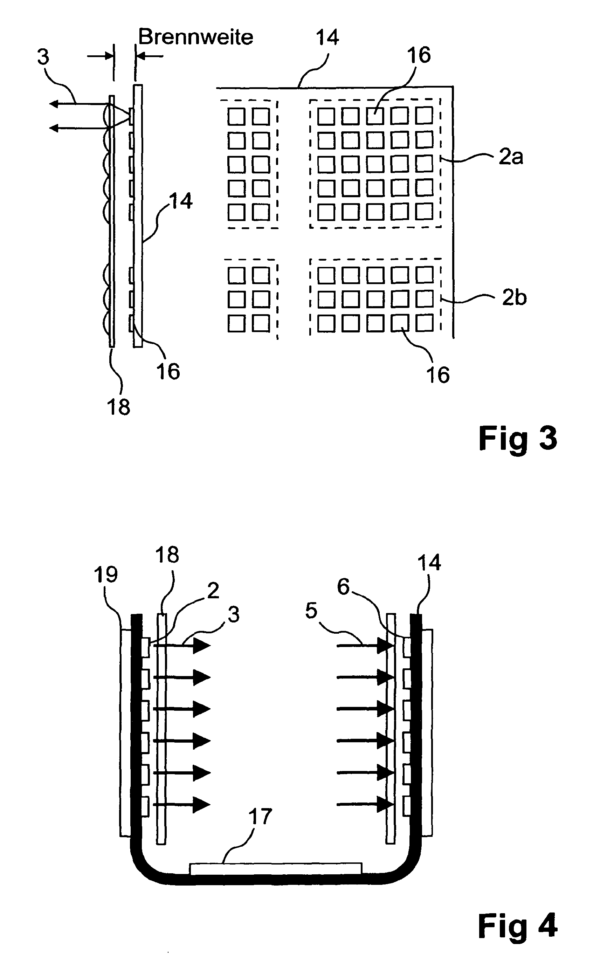

Figur 3 zeigt eine spezielle Anordnung von Sendern 2a bis 2n auf der Polymerfolie 14 des optischen Sensors 1 gemäß Figur 2. Jeder Sender 2a bis 2n besteht aus einer Mehrfachanordnung von Sendeelementen 16, die in einer quadratischen Anordnung auf der Polymerfolie 14 aufgesetzt sind. Vor der Polymerfolie 14 mit den einzelnen Sendern ist eine ein Array von Optikelementen 15 aufweisende Optikplatte 18 so angeordnet, dass jeweils ein Optikelement 15 vor einer Sendereinheit 7 eines Senders 2, 2a bis 2n angeordnet ist. Der Abstand zwischen Optikplatte 18 und Polymerfolie 14 ist so gewählt, dass die Sendeelemente 16 der Sender 2, 2a bis 2n in den Brennpunkten der Optikclemente 15 liegen. Die in geringem Abstand vor der Polymerfolie 14 angeordnete Optikplatte 18 sorgt somit dafür, dass die Sendelichtstrahlen 3, 3a bis 3n kollimiert oder fokussiert werden.

Figur 4 zeigt den optischen Sensor 1 gemäß Figur 2 in einer Ausführungsforrn, bei der Teile der Polymerfolie 14 flexibel sind, wobei die Bereiche mit der Bestückung mit den Sendern 2, 2a bis 2n und Empfängern 6, 6a bis 6n durch Platten 19 versteift werden. Durch die zweifache Faltung der Polymerfolie 14 um 90° wird eine Gabellichtschranke gebildet, bei der sich Sender 2 und Empfänger 6 gegenüberliegen. Den Sendern 2, 2a bis 2n ist wiederum eine Optikplatte 18 zugeordnet. Eine entsprechende Optikplatte 18 ist den Empfängern 6, 6a bis 6n vorgeordnet, um die Empfangslichtstrahlen 5, 5a bis 5n auf die Empfänger 6, 6a bis 6n zu fokussieren. Die Empfänger 6, 6a bis 6n können einen zu dem segmentierten Aufbau der Sender 2, 2a bis 2n gemäß Figur 3 entsprechenden Aufbau aufweisen.

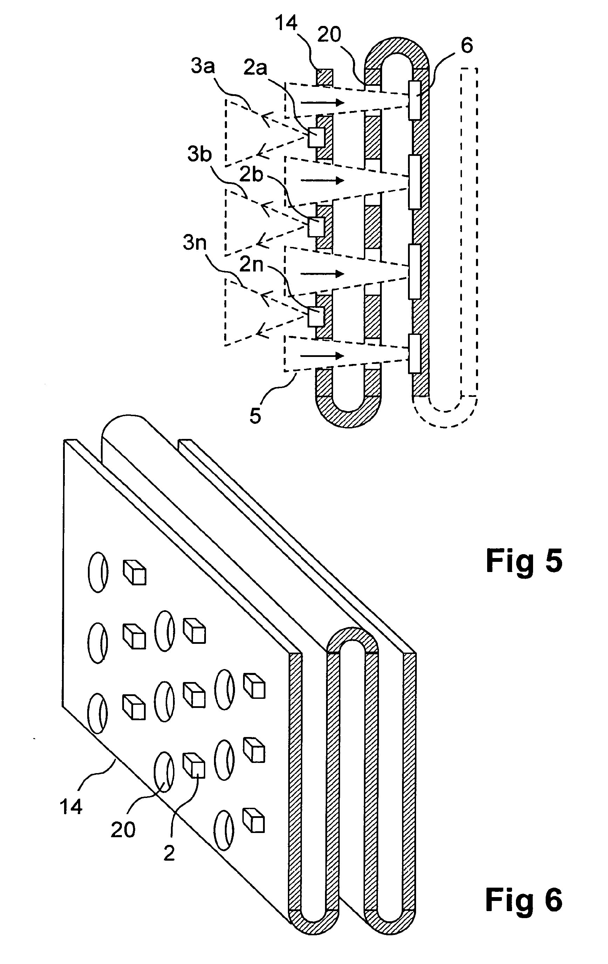

Figur 5 zeigt eine Ausführungsform eines optischen Sensors 1 als Reflexlichttaster, wobei die Polymerfolie 14 mehrfach um 180° gefaltet ist. In der obersten Lage sind die Sender 2a bis 2n aufgebracht. Bohrungen in dieser Lage bilden zusammen mit den Bohrungen in der darunterliegenden Lage die Blenden 20 für die Empfänger 6, die sich auf der dritten Lage der Polymerfolie 14 befinden. In einer vierten Lage können die Auswerteeinheit 9, Versorgungselemente und weitere Elektronikkomponenten des optischen Sensors 1 vorgesehen werden. Diese ist als Versorgungslage gestrichelt in Figur 5 dargestellt.

Figur 6 zeigt eine perspektivische Darstellung der Anordnung gemäß Figur 5.

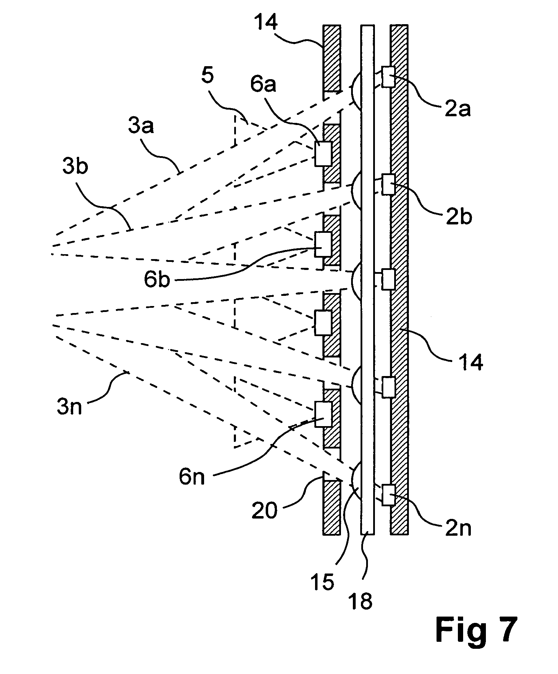

Figur 7 zeigt eine Ausführungsform eines optischen Sensors 1 mit in zwei Lagen angeordneten Polymerfolien 14 und einer dazwischen liegenden Optikplatte 18. Die Sender 2, 2a bis 2n des optischen Sensors 1 befinden sich auf der ersten Polymerfolie 14, die Empfänger 6, 6a bis 6n des optischen Sensors 1 befinden sich auf der zweiten Polymerfolie 14. Die Optikelemente 15 auf der Optikplatte 18 sind zu den Sendern 2a bis 2n so versetzt, dass die Sendelichtstrahlen 3a bis 3n auf einen gemeinsamen Punkt gerichtet sind. Mit solchen definierten Strahlführungen sind Reflexlichttaster zur Distanzerkennung auf diffus reflektierende und spiegelnde Objekte 4 möglich.

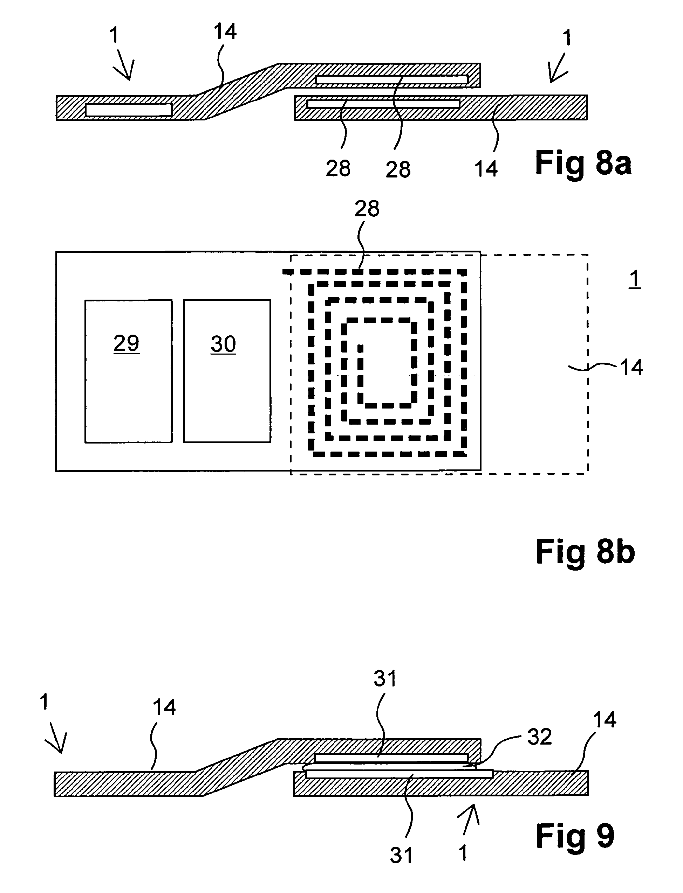

Die Figuren 8a und 8b zeigen die Kopplung zweier optischer Sensoren 1. Die Komponenten der identisch ausgebildeten optischen Sensoren 1 sind jeweils auf einer Polymerfolie 14 angeordnet. Zur Kopplung der optischen Sensoren 1 überlappen sich die Enden der Polymerfolie 14, wobei im Überlappungsbereich Spulen 28 ausgebildet sind, die eine induktive Kopplung zur Übertragung von Signalen und Versorgungsenergie bilden. Eine Batterie 29 und eine Solarzelle 30 dienen zur Energieversorgung des jeweiligen optischen Sensors 1.

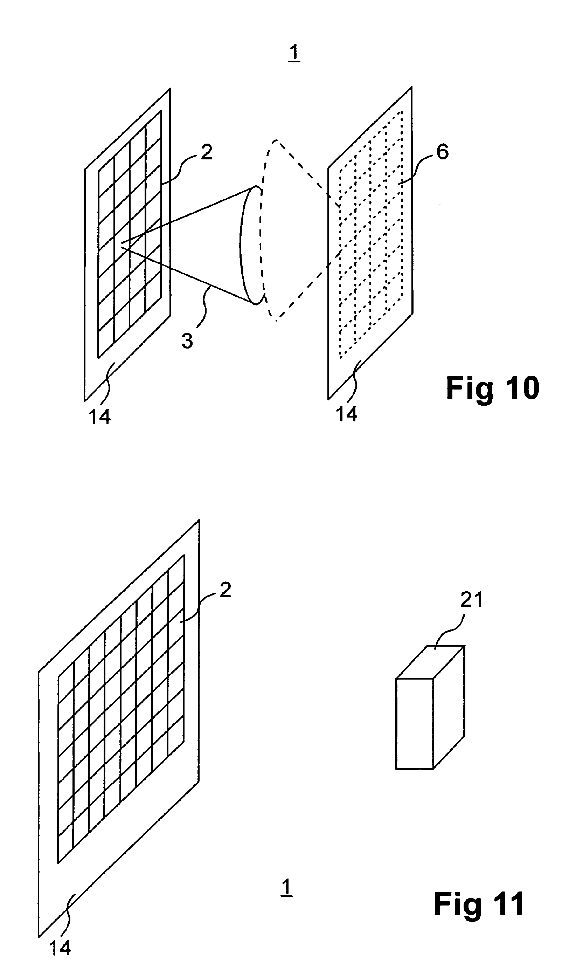

Figur 10 zeigt eine Ausführungsform eines optischen Sensors 1 als Lichtschrankenanordnung. Auf einer ersten Polymerfolie 14 ist eine großflächige Anordnung von Sendern 2 als Senderarray vorgesehen. Auf einer zweiten Polymerfolie 14 ist eine großflächige Anordnung von Empfängern 6 als Empfängerarray vorgesehen. Der Übersichtlichkeit halber sind die elektronischen Komponenten auf den Polymerfolien 14 des optischen Sensors 1 nicht dargestellt. Die Polymerfolien 14 mit dem Senderarray und dem Empfängerarray sind beidseits des Überwachungsbereichs, in welchem eine Objektdetektion erfolgt, gegenüberliegend angeordnet. Die Größe des Empfängerarrays ist an die Größe des Senderarrays angepasst.

Zur Objektdetektion emittieren die Sender 2, 2a bis 2n als Senderarrays Sendelichtstrahlen 3, 3a bis 3n, die bei freiem Überwachungsbereich auf das Empfängerarray treffen. Tritt ein Objekt 4 in den Überwachungsbereich ein, wird von diesem ein Teil der Sendelichtstrahlen 3, 3a bis 3n abgeschattet und gelangt nicht mehr auf das Empfängerarray, so dass in der Auswerteeinheit 9, die auf der Polymerfolie 14 des Empfängerarrays integriert ist, eine Objektmeldung generiert wird. Bei der Anordnung gemäß Figur 10 können das Senderarray ohne Optik und der Empfänger 6 als Empfängerarray ohne Optik ohne einen Justagevorgang als Lichtschranke arbeiten.

Figur 11 zeigt einen optischen Sensor 1 mit einer großflächigen Anordnung von Sendern 2 auf einer Polymerfolie 14, welche für eine Kamera 21 als Hintergrundfläche 33 dienen. Durch zeitinvariante Muster, wie z. B. vertikale oder horizontale Streifen von selektiv aktivierten Sendern 2, 2a bis 2n können Objekte 4 zwischen der Kamera 21 und der Hintergrundfläche 33 bezüglich Position und Größe beurteilt werden.

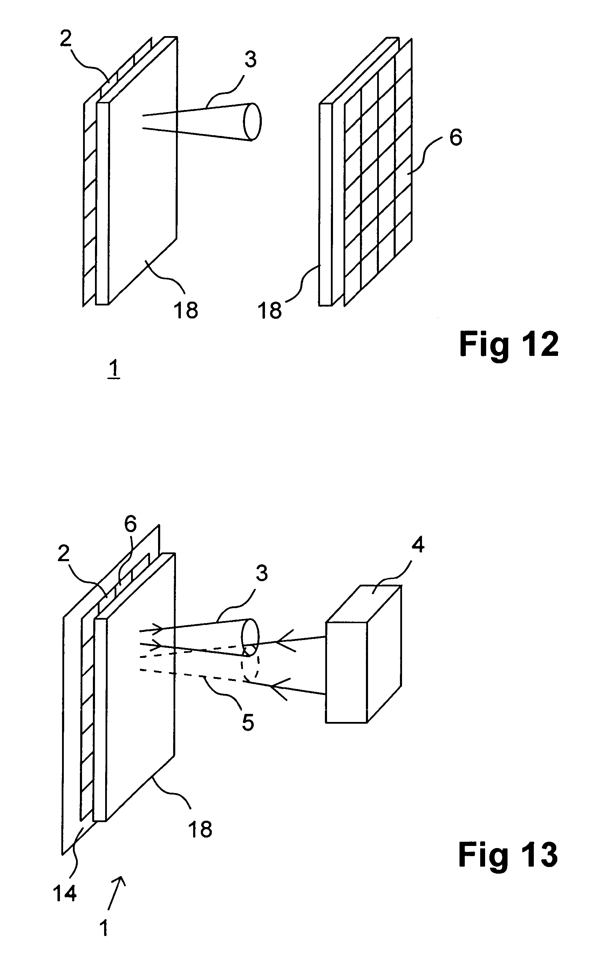

Figur 12 zeigt eine Variante der Ausführungsform des optischen Sensors 1 gemäß Figur 10. Der optische Sensor 1 ist wiederum als Lichtschrankenanordnung ausgebildet und weist auf zwei gegenüberliegend angeordneten Polymerfolien 14 ein von Sendern 2 gebildetes Senderarray und ein von Empfängern 6 gebildetes Empfängerarray auf. Dem Senderarray mit den Sendern 2 ist eine Optikplatte 18 nachgeordnet. Dem Empfängerarray mit den Empfängern 6 ist eine weitere Optikplatte 18 vorgeordnet. Die Optikplatten 18 weisen analog zur Ausführungsform gemäß Figur 4 in Figur 12 nicht gesondert dargestellte Optikelemente 15 zur Strahlformung zur Fokussierung der Sendelichtstrahlen 3 auf.

Figur 13 zeigt eine Ausführungsform eines optischen Sensors 1 als energetischer Taster. Der optische Sensor 1 weist eine Polymerfolie 14 auf, auf welcher ein Array mit Sendern 2 und Empfängern 6 angeordnet ist. Die Sender 2 und die Empfänger 6 des Arrays können beispielsweise alternierend angeordnet sein. Die weiteren nicht dargestellten elektronischen Komponenten des optischen Sensors 1 sind bevorzugt auf derselben Polymerfolie 14 angeordnet. Wenn die von den Sendern 2 emittierenden Sendelichtstrahlen 3 auf ein Objekt 4 treffen, das dem Array nahe genug kommt, werden die Sendelichtstrahlen 3 von den Empfangslichtstrahlen 5 zu den Empfängern 6 des Arrays reflektiert und das Objekt 4 dadurch erkannt.

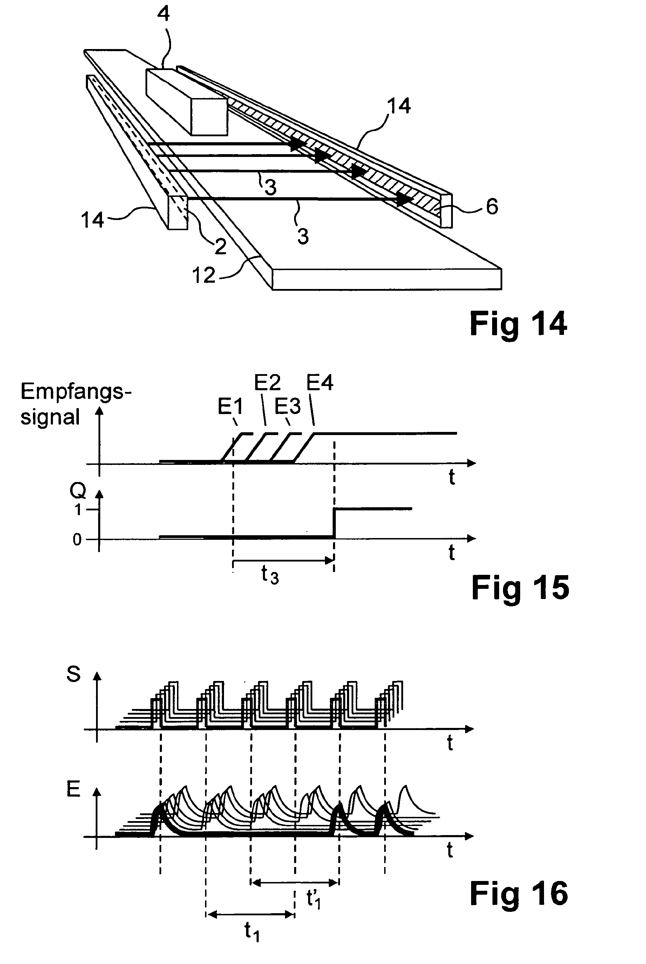

Figur 14 zeigt ein Objekt 4, das auf einer Rollenbahn 12 transportiert wird. Der optische Sensor 1 umfasst zwei Polymerfolien 14, die als Band längs der Rollenbahn 12 angeordnet sind und mehrere jeweils Reihenanordnungen in Längsrichtung der Rollenbahn 12 bildende versetzt angeordnete Sender 2 und Empfänger 6 tragen. Mit dem so ausgebildeten optischen Sensor 1 wird ein auf der Rollenbahn 12 transportiertes Objekt 4 fortlaufend erfasst. Dabei bilden die gegenüberliegend angeordneten Sender 2, 2a bis 2n und Empfänger 6, 6a Einzelsensoren, mit welchen das Objekt 4 vom jeweiligen Ort der Rollenbahn 12 erfasst wird.

In Figur 15 sind die zeitlichen Verläufe der Empfangssignale der Empfänger 6, 6a bis 6n des optischen Sensors 1 gemäß Figur 14 (oberes Diagramm) und das daraus in der Auswerteeinheit 9 abgebildete Objektfeststellungssignal Q (unteres Diagramm) dargestellt. Im oberen Diagramm ist veranschaulicht, dass das auf der Rollenbahn 12 angeordnete Objekt 4 nacheinander von verschiedenen Empfängern 6, 6a bis 6n erfasst wird (E1, E2, E3, E4).

Das Objektfeststellungssignal Q wechselt vom Schaltzustand 0 (freier Überwachungsbereich) in den Schaltzustand 1 (Objekt erkannt), wenn für eine vorgegebene Zeit t₃ das Objekt 4 fortlaufend von Empfängern 6, 6a bis 6n des optischen Sensors 1 detektiert wurde.

Der Vorteil der Mehrfachanordnung von Sendern 2, 2a bis 2n und Empfängern 6, 6a bis 6n des optischen Sensors 1 gemäß Figur 14 besteht darin, dass mit deren Hilfe die Objektposition trotz ungenauer Einzelsensorelemente präzise ermittelt werden kann. Im Gegensatz zur punktuellen und schnell schaltenden Einzelsensorik nach dem Stand der Technik kann durch Beobachtung und Auswertung des Objektflusses ein gleichwertiges oder besseres Ergebnis erzielt werden.

Dies ist weiterhin in den Zeitdiagrammen von Figur 16 veranschaulicht.

Figur 16 zeigt die zeitlichen Verläufe der Sendepulse S und der Empfangspulse E der Anordnung nach Figur 14. Wie aus dem oberen Diagramm emittieren sämtliche Sender 2, 2a bis 2n des optischen Sensors 1 Sendepulse mit einer vorgegebenen Periodendauer. Das Diagramm im Vordergrund zeigt die Sendepulse des ersten Senders 2 in Bewegungsrichtung des Objekts 4, das dahinterliegende Diagramm die Sendepulse des zweiten Senders 2 usw. Entsprechend zeigt das untere Diagramm die von den den Sendern 2, 2a bis 2n zugeordneten Empfängern 6, 6a bis 6n empfangenen Empfangspulse. Aus diesem Diagramm ist ersichtlich, dass durch eine Strahlenunterbrechung des Sendelichts der erste Empfänger 6, 6a bis 6n das Objekt 4 zu einer Zeit t₁ detektiert, der zweite Empfänger 6, 6a bis 6n zu einer späteren Zeit t₁' usw. Bei der Abdeckung durch das Objekt 4 müssen bei einer Lichtschranke nach dem Stand der Technik Empfänger 6, 6a bis 6n und Sender 2, 2a bis 2n durch gleichlaufende Quarze synchronisiert werden. Bei der Anordnung nach Figur 14 behalten immer einige Lichtachsen direkte Verbindung, d. h. die Sendepulse der Sender 2, 2a bis 2n dieser Lichtachsen gelangen zu den zugeordneten Empfängern 6, 6a bis 6n, wodurch die Synchronisierung des optischen Sensors 1 sichergestellt ist.

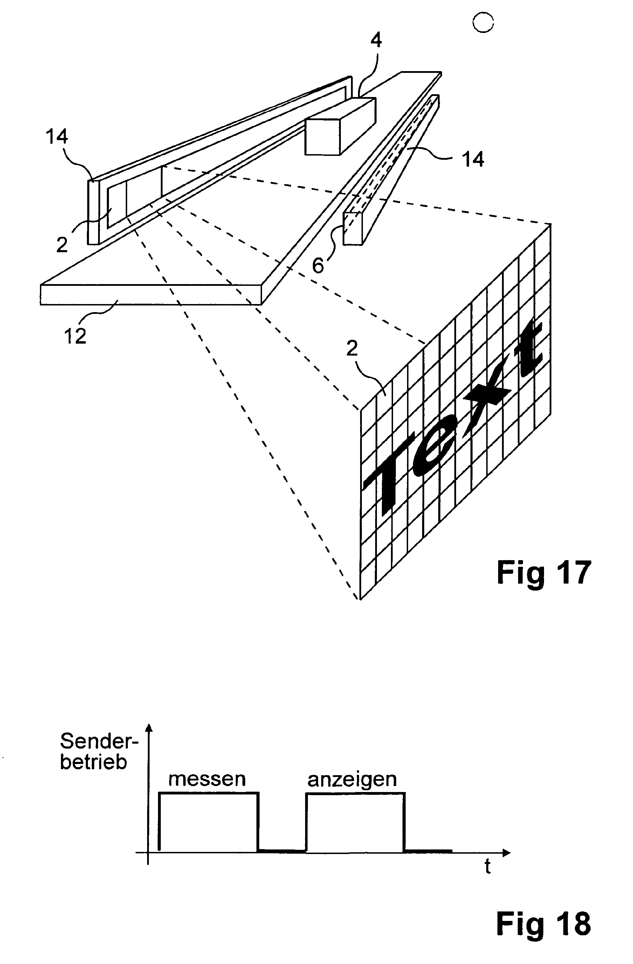

Figur 17 zeigt die Anordnung nach Figur 14, wobei die Sender 2 nach einer wie in Figur 18 gezeigten Messphase in eine Anzeigephase als Anzeigefläche fungieren und zum Beispiel einen mit dem Objekt 4 mitlaufenden Text präsentieren. Die Anzeige kann Symbole darstellen, die Objektmerkmale oder Sensorfehlfunktionen melden.

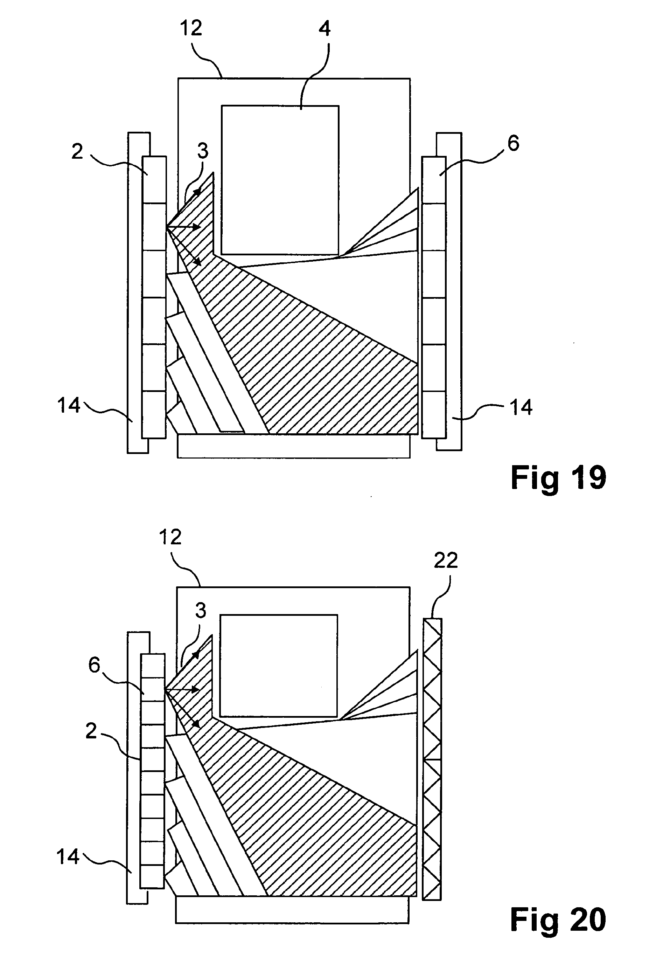

In Figur 19 ist eine spezifische Auswertung der Empfangssignale für die Lichtschrankenanordnung gemäß Figur 14 veranschaulicht. Die Objektposition wird in diesem Fall aus der Summe der nicht vom Objekt 4 abgeschatteten Empfangsstrahlen ermittelt.

Figur 20 zeigt eine gegenüber Figur 19 dahingehend modifizierte Lichtschrankenanordnung, dass ein optischer Sensor 1 eine alternierende Anordnung von Sendern 2, 2a bis 2n und Empfängern 6, 6a bis 6n auf einer Polymerfolie 14 an einem längsseitigen Rand der Rollenbahn 12 aufweist. Die Sendelichtstrahlen 3 der Sender 2 sind auf ein Reflektorband 22 am gegenüberliegenden Rand der Rollenbahn 12 gerichtet.

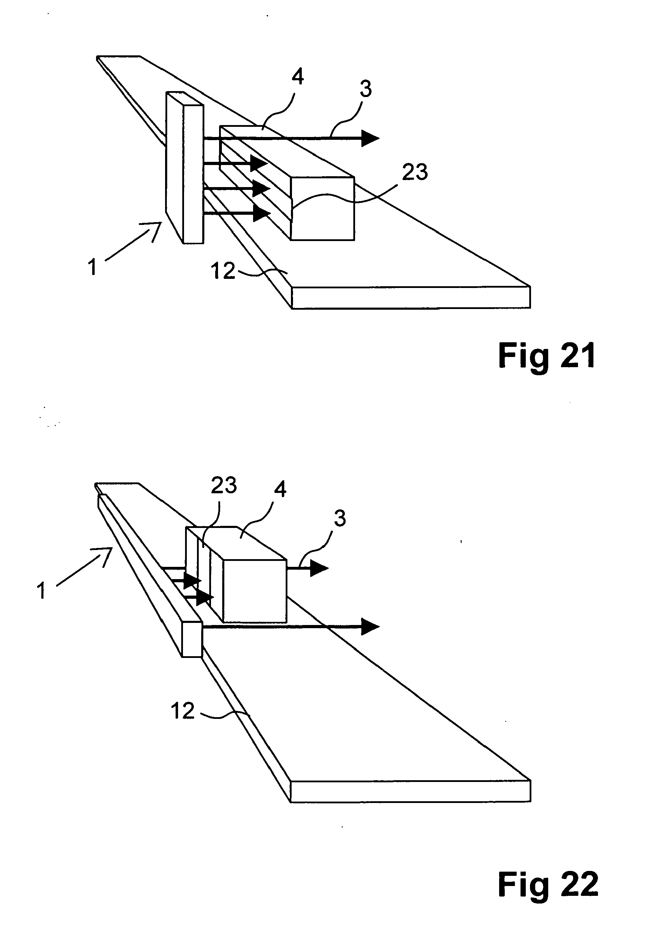

Figur 21 zeigt einen optischen Sensor 1 nach Figur 13 an einer Rollenbahn 12 vertikal angeordnet, um ein horizontal auf dem Objekt 4 aufgebrachtes Polymerlabel 23 zu erkennen und die aufgebrachte Information optisch auszulesen. Die Sender 2 des optischen Sensors 1 aktivieren das Polymerlabel 23 und veranlassen dieses einen optischen Code zu senden, der die gespeicherte Information enthält. Der Code wird von den Empfängern 6 des optischen Sensors 1 empfangen und in der Auswerteeinheit 9 des optischen Sensors 1 ausgewertet.

Figur 22 zeigt die Anordnung nach Figur 21, wobei die Orientierung von optischen Sensoren 1 und Polymerlabel 23 vertauscht sind. Die Orientierungen sollten vorzugsweise 90° zueinander stehen um gegen Positionstoleranzen unempfindlich zu sein.

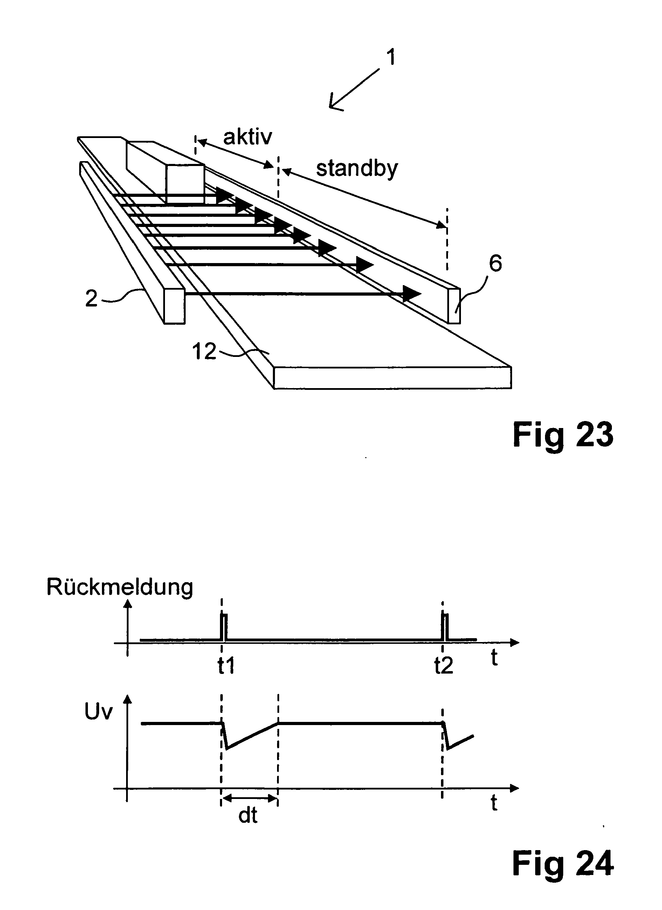

Figur 23 zeigt eine Variante der Lichtschrankenanordnung nach Figur 14, bei welcher die Empfänger 6 des optischen Sensors 1 durch die Sendelichtstrahlen 3 mit Energie versorgt werden. Um Energie zu sparen, arbeiten fast alle Empfänger 6 im Standbybetrieb, bis sie durch die ersten Empfänger 6 aktiviert werden. Der Empfängerteil des optischen Sensors 1 gemäß Figur 23 bildet somit ein autarkes Lichtschrankenband.

Figur 24 zeigt, wie der autarke Empfangsteil des optischen Sensors 1 mit den Empfängern 6 zum Zeitpunkt t₁ eine Objektmeldung über Funk an den Senderteil des optischen Sensors 1 zurückmeldet und danach die Versorgungsspannung Uv im Zeitraum dt wieder durch die Sendelichtstrahlen 3 uuf den Arbeitspegel nachgeladen wird.

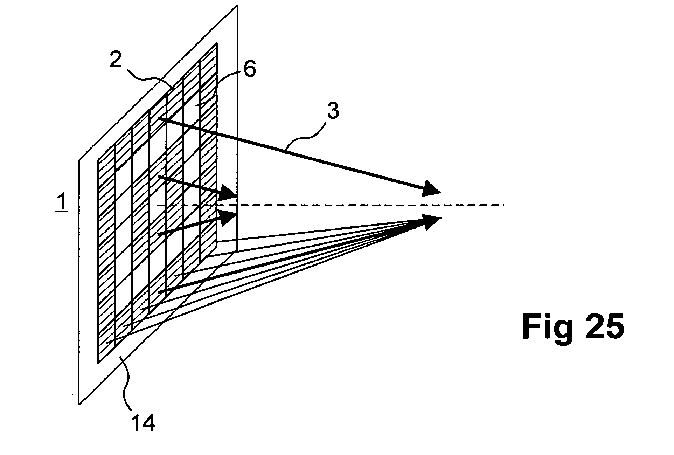

Figur 25 zeigt eine auf einer Polymerfolie 14 angeordnete Sender-Empfänger-Anordnung für einen optischen Sensor 1. Die Sender-Empfänger-Anordnung weist eine außen am Rand liegende erste konzentrische Anordnung von Sendern 2 und eine innenliegende zweite Anordnung von Sendern 2 auf, welche durch eine konzentrische Anordnung von Empfängern 6 getrennt sind. Die Sendelichtstrahlen 3 der außen angeordneten Sender 2 sind auf einen ferner gelegenen Punkt auf der optischen Achse fokussiert, die Sendelichtstrahlen 3 der innen liegenden Sender 2 sind auf einen nahe gelegenen Punkt gerichtet. Die Anzahl der außen liegenden Sender 2 ist erheblich größer als die Anzahl der innen liegenden Sender 2. Dadurch wird eine weitgehend lineare Abhängigkeit der Empfangskennlinie vom Objektabstand erhalten. Bei einstrahligen Sensoren nach dem Stand der Technik fällt die Empfangskennlinie dagegen mit dem Abstand quadratisch ab.

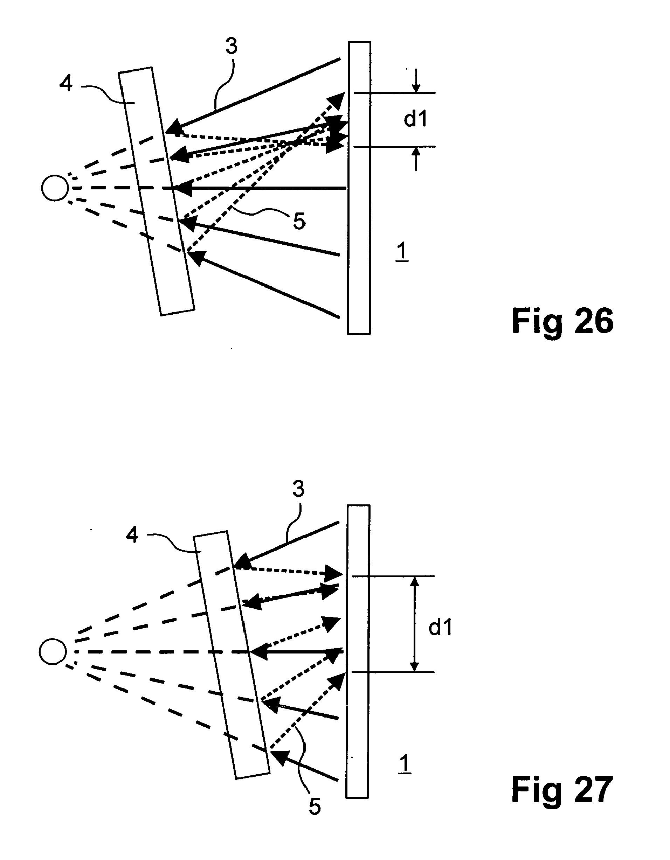

Figur 26 zeigt eine Sender-Empfänger-Anordnung eines optischen Sensors 1 gemäß Figur 7, bei welcher alle Sendelichtstrahlen 3 auf einen Punkt auf der optischen Achse gerichtet sind. Die Sender 2 werden nacheinander eingeschaltet. Dabei wird beobachtet, welche Empfänger 6 das von einem spiegelnden Objekt 4 reflektierte Empfangslicht 5 registrieren. Im Gegensatz zu einem einstrahligen Sensor nach dem Stand der Technik, bei dem ein hoher Prozentsatz des Sendelichtes vom Sensor weggespiegelt wird und nur der geringe, diffus reflektierte Anteil ausgewertet werden kann, wird in diesem Fall das gespiegelte Licht durch den großflächigen optischen Sensor 1 erfasst. Bei dem in Figur 26 dargestellten Beispiel ist das spiegelnde Objekt 4 vor dem Fokuspunkt der Sendelichtstrahlen 3 angeordnet. Demzufolge überkreuzen sich die vom Objekt 4 zurückreflektierten Empfangslichtstrahlen 5. Deren Breite d1 auf der Fläche des optischen Sensors 1 ist ein Maß für den Abstand zum Objekt 4. Aus dem Schwerpunkt aller Empfangslichtstrahlen 5 auf den Empfängern 6 des optischen Sensors 1 kann die Flächennormale des Objektes 4 bestimmt werden. Der optische Sensor 1 gemäß Figur 26 bildet somit einen Glanztaster, mit welchem durch Erfassung der gerichtet an einem Objekt 4 reflektierten Sendelichtstrahlen 3 der Objektabstand und die Objektorientierung bestimmt werden kann.

Figur 27 zeigt den Strahlengang der Anordnung gemäß Figur 26 bei einem kleineren Objektabstand. Die Breite d1 des auf die Ebene des optischen Sensors 1 abgebildeten Lichtflecks der Empfangslichtstrahlen 5, 5a bis 5n ist in diesem Fall vergrößert.

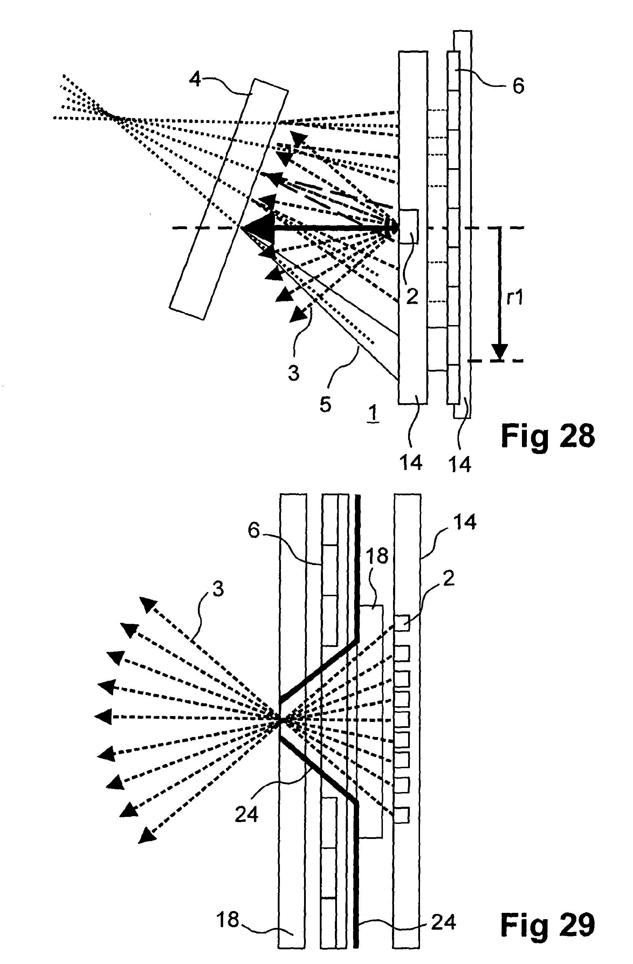

Figur 28 zeigt eine weitere Ausführungsform eines als Glanztaster ausgebildeten optischen Sensors 1 zur Detektion von spiegelnden Objekten 4, bei der die Sendelichtstrahlen 3 der Sender 2 divergent abgestrahlt werden. Der optische Sensor 1 gemäß Figur 28 umfasst eine Anordnung von Empfängern 6 auf einer Polymerfolie 14, die in einer ersten Ebene liegt. Vor dieser Polymerfolie 14 liegt eine weitere Polymerfolie 14 mit einer Anordnung von Sendern 2, welche die divergenten Sendelichtstrahlen 3, 3a bis 3n abstrahlen. Der Abstand r₁ der einzelnen Empfangsstrahlen zum Zentrum des optischen Sensors 1 ist auch hier ein Maß für den Objektabstand.

Figur 29 zeigt ein weiteres Beispiel eines mit divergenten Sendelichtstrahlen 3 arbeitenden optischen Sensors 1 in Form eines Sendearrays auf einer zurückgesetzten Polymerfolie 14 mit nachgeordneter Optikplatte 18. Davor ist eine weitere Polymerfolie 14 mit einer Anordnung von Empfängern 6, 6a bis 6n angeordnet, welcher eine weitere Optikplatte 18 vorgeordnet ist. Mittels einer trichterförmigen Blende 24 wird aus den Sendelichtstrahlen 3, 3a bis 3n der Sender 2, 2a bis 2n ein divergentes Strahlebündel geformt.

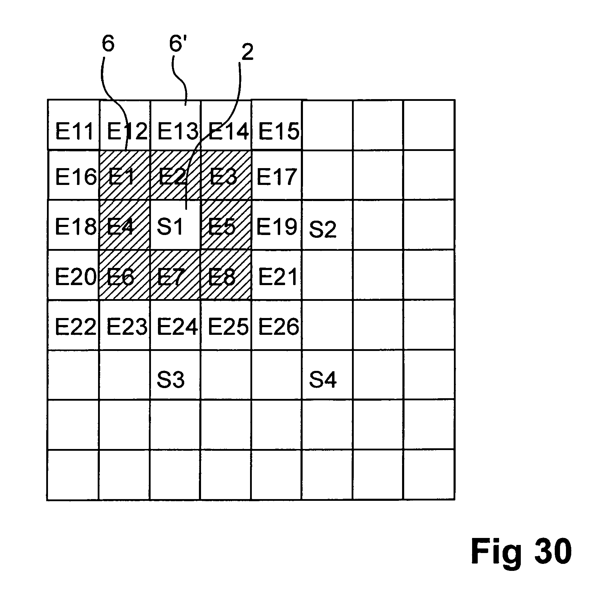

Figur 30 zeigt eine weitere Ausführungsform Sender-Empfänger-Anordnung des optischen Sensors 1, bei der jeweils um einen Sender 2 mehrere Empfänger 6,6' angeordnet sind, wobei erste Empfänger 6 zum Sender 2 direkt benachbart sind und zweite Empfänger 6' zum Sender 2 als übernächste Nachbarn einen größeren Abstand haben. In Figur 30 sind die nächsten Nachbarn eines Senders S1 bildenden Empfänger 6 mit E1 bis E8 bezeichnet. Die übernächsten Nachbarn von S1 sind mit E11 bis E26 bezeichnet. Von diesen bilden die mit E 23 bis E25 bezeichneten Empfänger 6 wieder die nächsten Nachbarn des Senders S3, die mit E17, E19, E21 bezeichneten Empfänger 6 die nächsten Nachbarn des Senders S2 usw. Der optische Sensor 1 gemäß Figur 30 arbeitet nach dem Prinzip einer Reflexionslichtschranke. Bei freiem Strahlengang treffen die von den einzelnen aktivierbaren Sendern 2 emittierten Sendelichtstrahlen 3, 3a bis 3n auf einen dem Überwachungsbereich begrenzenden Tripelreflektor. Ist beispielsweise der mit S1 bezeichnete Sender 2 aktiviert worden, so werden die Empfangslichtstrahlen 5 von dem Tripelreflektor vorwiegend zu den direkt benachbarten Empfängern 6, bezeichnet mit E1 bis E8, reflektiert. Bei einem spiegelnden oder diffus reflektierenden Objekt im Überwachungsbereich erhalten auch die Empfänger 6, bezeichnet mit E11 bis E26, Licht. Durch die Auswertung des Verhältnisses der auf die Empfänger 6, 6' auftreffenden Lichtmengen ist somit eine Objekterfassung möglich.

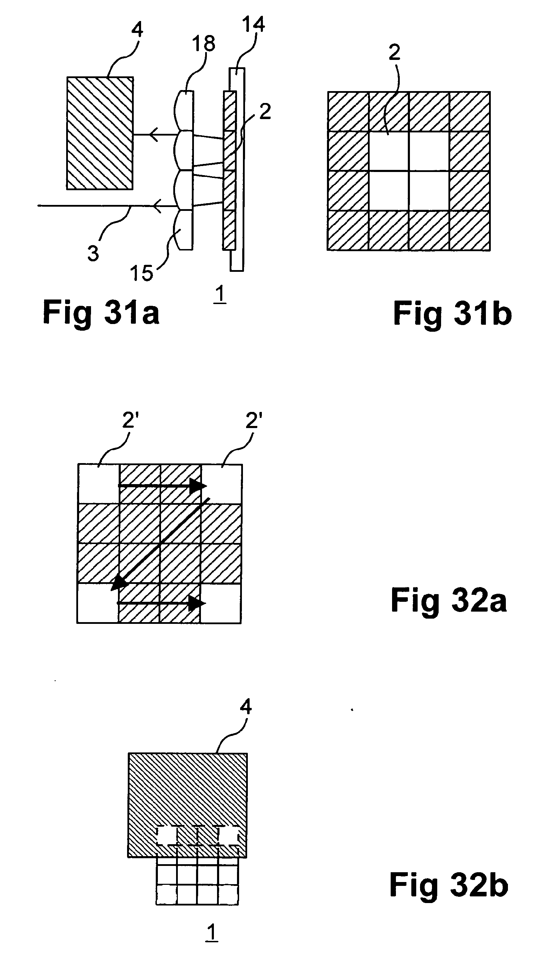

Figur 31 a zeigt schematisch die sendeseitigen Komponenten eines als Lichttaster ausgebildeten optischen Sensors 1. Der optische Sensor 1 weist eine quadratische Anordnung von auf einer Polymerfolie 14 angeordneten Sendern 2 auf. Den Sendern 2 ist zur Strahlformung der Sendelichtstrahlen 3, 3a bis 3n eine Optikplatte 18 mit Optikelementen 15 vorgeordnet. Die von einem Objekt 4 diffus zurückreflektierten Sendelichtstrahlen 3 werden in einer nicht dargestellten Anordnung von Empfängern registriert, die neben den Sendern 2 angeordnet sein können. Bei dem in Figur 31b dargestellten ersten Betriebsmodus werden nur die vier innen liegenden Sender 2 zur Objektdetektion genutzt, wodurch eine schnelle Objektdetektion ermöglicht wird.

Die Figuren 32a, b zeigen den optischen Sensor 1 gemäß Figur 1 im Betriebsmodus "Positionsbestimmung", bei dem die äußeren Sender 2' nacheinander aktiviert werden und damit ein seitlich eintauchendes Objekt 4 bezüglich seiner groben Position erkennen zu können.

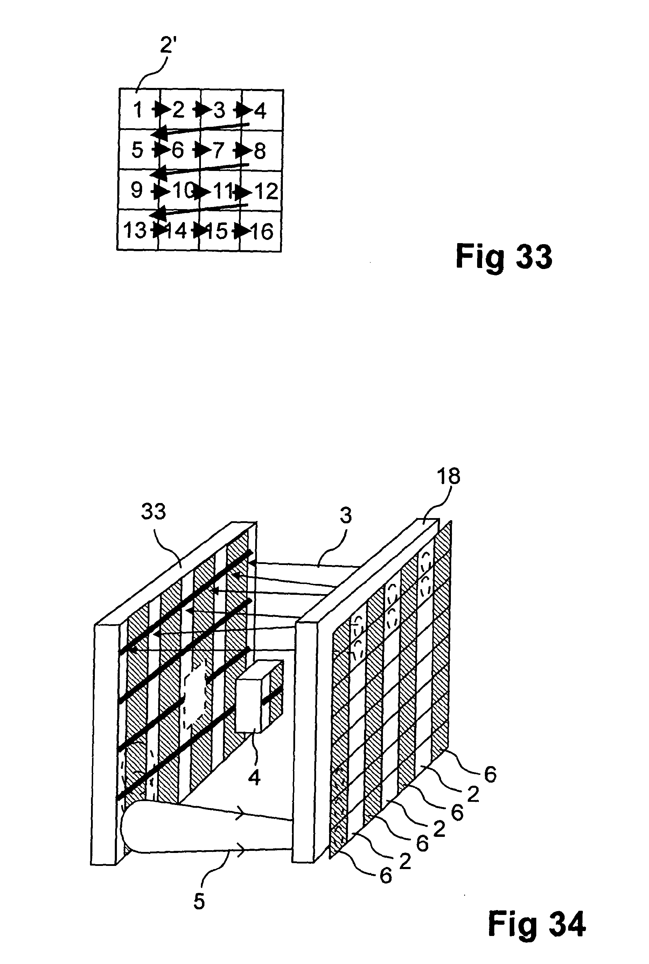

Figur 33 zeigt einen Betriebsmodus des optischen Sensors 1 gemäß Figur 31a, bei welchem die einzelnen Sender 2 zeilenweise nacheinander aktiviert werden. Die Reihenfolge der Aktivierung der Sender 2, 2a bis 2n ist durch die Nummerierung in Figur 33 veranschaulicht.

Figur 34 zeigt einen optischen Sensor 1 zur Detektion von Objekten 4, die insbesondere vor einem Hintergrund 33 angeordnet sein können. Der optische Sensor 1 umfasst eine alternierende Spaltenanordnung von Sendern 2 und Empfängern 6, die auf einer gemeinsamen Polymerfolie 14 angeordnet sind. Dieser ist wiederum eine Optikplatte 18 vorgeordnet. Über die Auswerteeinheit 9 des optischen Sensors 1 können die Sender 2 zeilenweise angesteuert und die Empfänger 6 spaltenweise abgefragt werden. Damit kann ein kleines Objekt 4 erkannt und bezüglich seiner groben Position bestimmt werden.

Figur 35 zeigt einen optischen Sensor 1 mit einer jeweils kreisringförmigen Sende- und Empfangsanordnung, wobei die Sender 2 und die Empfänger 6 einzeln nacheinander aktiviert bzw. abgefragt werden. Damit kann die Kante eines Objektes 4 erkannt und bezüglich der seitlichen Position beurteilt werden.

Figur 36 zeigt die Seitenansicht des optischen Sensors 1 nach Figur 35. Der Öffnungswinkel 34 des Empfängers 6 ist so groß, dass sich die Sendelichtstrahlen 3 und der Sichtbereich des Empfängers 6 überschneiden. Der optische Sensor 1 gemäß Figur 36 umfasst eine Optikplatte 18 mit zugeordnetem Schirm 35.

Figur 37 zeigt einen optischen Sensor 1 mit einer Polymerfolie 14, auf welcher eine flächige Anordnung von Sendern 2 und Empfängern 6 vorgesehen ist, wobei die Sender 2 und Empfänger 6 alternierend angeordnet sind. Der Polymerfolie 14 ist eine Optikplatte 18 vorgeordnet. Wie aus Figur 37 ersichtlich, laufen die optischen Achsen eines Senders 2 und eines benachbarten Empfängers 6 in spitzem Winkel (V-förmig) aufeinander zu. Dadurch entsteht ein V-Taster mit mehreren Überschneidungen 36. Gegenüber einem einstrahligen V-Taster nach dem Stand der Technik kann der optische Sensor 1 gemäß Figur 37 die grobe Position der Kante des Objektes 4 bezüglich Distanz und Längsposition ermitteln.

### Bezugszeichenliste

- (1): optischer Sensor
- (2): Sender
- (2a-2n): Sender
- (3): Sendelichtstrahl
- (3a-3n): Sendelichtstrahl
- (4): Objekt
- (5): Empfangslichtstrahl
- (5a-5n): Empfangslichtstrahl
- (6): Empfänger
- (6a-6n): Empfänger
- (7): Sendereinheit
- (8): Empfängereinheit
- (9): Auswerteeinheit
- (10): Schaltausgang
- (11): Serielle Schnittstelle
- (12): Rollenbahn
- (13): Sensorbus
- (14): Polymerfolie
- (15): Optikelemente
- (16): Sendeelemente
- (17): Diskretes Bauelement
- (18): Optikplatte
- (19): Platte
- (20): Blende
- (21): Kamera
- (22): Reflektorband
- (23): Polymerlabel
- (24): Blende
- (25): Ansteuerschaltung
- (26): Auswerteschaltung
- (27): Versorgungs- und Verbindungsteil
- (28): Spule
- (29): Batterie
- (30): Solarzelle
- (31): Kontakt
- (32): Leitkleber
- (33): Hintergrund
- (34): Öffnungswinkel
- (35): Schirm
- (36): Überschneidung

## Patentansprüche

1. Optischer Sensor (1) mit wenigstens einem Sendelichtstrahl (3, 3a bis 3n) emittierenden Sender (2, 2a bis 2n), wenigstens einem Empfangslichtstrahlen (5, 5a bis 5n) empfangenden Empfänger (6, 6a bis 6n) sowie einer Auswerteeinheit (9) zur Generierung eines Objektfeststellungssignals in Abhängigkeit der am Ausgang des Empfängers (6, 6a bis 6n) anstehenden Empfangssignale, **dadurch gekennzeichnet, dass** der Sender (2, 2a bis 2n) und/oder der Empfänger (6, 6a bis 6n) und/oder wenigstens Komponenten der Auswerteeinheit (9) als organische Halbleiter enthaltende Sensorkomponenten ausgebildet sind.

2. Optischer Sensor nach Anspruch 1, **dadurch gekennzeichnet, dass** die organische Halbleiter enthaltenden Sensorkomponenten durch ein Druckverfahren auf wenigstens einer Polymerfolie (14) aufgedruckt sind.

3. Optischer Sensor nach einem der Ansprüche 1 oder 2, **dadurch gekennzeichnet, dass** sämtliche Sensorkomponenten organische Halbleiter enthalten.

4. Optischer Sensor nach einem der Ansprüche 1 bis 3, **dadurch gekennzeichnet, dass** dieser Mehrfachanordnungen von Sendern (2, 2a bis 2n) und Empfängern (6, 6a bis 6n) aufweist, welche auf einer Polymerfolie (14) oder auf unterschiedlichen Polymerfolien (14) aufgebracht sind.

5. Optischer Sensor nach Anspruch 4, **dadurch gekennzeichnet, dass** den Sendern (2, 2a bis 2n) und/oder Empfängern (6, 6a bis 6n) Optikelemente (15) zugeordnet sind, die Bestandteile von Optikplatten (18) sind, welche auf die Polymerfolien (14) aufklebbar sind.

6. Optischer Sensor nach Anspruch 5, **dadurch gekennzeichnet, dass** mittels der Optikelemente (15) Sendelichtstrahlen (3, 3a bis 3n) kollimiert oder fokussiert werden.

7. Optischer Sensor nach einem der Ansprüche 1 bis 6, **dadurch gekennzeichnet, dass** zumindest Teile jeder Polymerfolie (14) flexibel und faltbar sind.

8. Optischer Sensor nach Anspruch 7, **dadurch gekennzeichnet, dass** eine Polymerfolie (14) derart gestaltet ist, dass dieses mehrere aufeinander liegende Lagen mit unterschiedlichen Sensorkomponenten bildet.

9. Optischer Sensor nach einem der Ansprüche 7 oder 8, **dadurch gekennzeichnet, dass** flexible Abschnitte von Polymerfolien (14) mittels Platten (19) versteifbar sind.

10. Optischer Sensor nach einem der Ansprüche 1 bis 9, **dadurch gekennzeichnet, dass** zumindest Teile einer Polymerfolie (14) starre plattenförmige Segmente bilden.

11. Optischer Sensor nach einem der Ansprüche 1 bis 10, **dadurch gekennzeichnet, dass** ein Segment einer Polymerfolie (14) ein Element zur Ankopplung an einen weiteren optischen Sensor (19) bildet.

12. Optischer Sensor nach Anspruch 11, **dadurch gekennzeichnet, dass** das Segment der Polymerfolie (14) wenigstens eine dort aufgedruckte Spule (28) zur induktiven Ankopplung an den weiteren optischen Sensor (1) aufweist.

13. Optischer Sensor nach Anspruch 11, **dadurch gekennzeichnet, dass** das Segment der Polymerfolie (14) einen dort aufgedruckten elektrischen Kontakt (31) aufweist, welcher mittels eines Leitklebers (32) mit einem entsprechenden Kontakt (31) des anderen optischen Sensors (1) verbindbar ist.

14. Optischer Sensor nach einem der Ansprüche 1 bis 13, **dadurch gekennzeichnet, dass** die Energieversorgung von Empfängern (6, 6a bis 6n) auf einer Polymerfolie (14) durch Sendelichtstrahlen (3, 3a bis 3n) von Sendern auf einer anderen Polymerfolie (14) erfolgt.

15. Optischer Sensor nach einem der Ansprüche 1 bis 14, **dadurch gekennzeichnet, dass** auf einem zu erfassenden Objekt (4) ein Polymer-ID angebracht ist, welches durch die Sendelichtstrahlen (3, 3a bis 3n) aktivierbar und auslesbar ist.

16. Optischer Sensor nach einem der Ansprüche 1 bis 15, **dadurch gekennzeichnet, dass** dessen Sender (2, 2a bis 2n) wahlweise zur Objektdetektion und als Textanzeige einsetzbar sind.
